# EUROPEAN PATENT APPLICATION

(11) **EP 3 822 152 A1**
(43) Date of publication of application: **19.05.2021**
(21) Application number: 20205459.9
(22) Date of filing: 03.11.2020
(51) Int. Cl.: B62J 1/08, B62K 19/36, B62J 43/28, B62J 43/13, B62M 6/90, B62K 3/10

(54) **BUILT-IN BATTERY DEVICE OF ELECTRIC BICYCLE**

(30) Priority: 18.11.2019 CN 201922032091 U
(71) Applicant: SHENZHEN FIIDO TECHNOLOGY DEVELOPMENT CO., LTD, Shenzhen Guangdong 518000 (CN)
(72) Inventor: Wang, Zhikai, Shenzhen, Guangdong 518000 (CN)
(74) Representative: Zaboliene, Reda

(57) **Abstract**

A built-in battery device of an electric bicycle, including a seat post connected to a base, the base is connected to a saddle, and a battery pack is arranged in the seat post, and the cross section of the seat post is an curved surface with a narrow front end and a wide rear end; the battery pack is disposed in a stack, and on the cross section of the seat post, the number of built-in batteries in a single row at the rear end is more than that in a single row at the front end. The vertical spacing of the battery pack is provided with a connection bracket which is fixedly connected to the head and the tail of the multi-layer batteries. The electric bicycle has the advantages of reasonable space utilization, beautiful appearance, convenient assembly and small wind resistance.

## Description

### CROSS REFERENCE TO RELATED DISCLOSURE

This disclosure claims priority benefit of Chinese Patent disclosure No. CN201922032091.8, filed on November 18, 2019, and the entire contents of which are incorporated herein by reference.

### TECHNICAL FIELD

The present disclosure relates to an electric bicycle, in particular to a built-in battery device of electric bicycle.

### BACKGROUND

The whole world is advocating energy conservation and emission reduction. China is a well deserved country of bicycles and electric vehicles. Electric bicycles are becoming more and more popular because they can effectively reduce the air pollution caused by fuel and they are convenient for travel.

At present, there are many solutions for how to place the battery of electric bicycle. For example, the Chinese patent CN201621219939.8 has disclosed "a new type of shock absorption frame for electric bicycle", the battery of which is placed on the inner side of the triangle frame. Another example is "an electric bicycle" disclosed by the Chinese patent CN201621256318.7, in which the battery module is arranged on the upper side of the seat stay. Chinese patent CN201621180425.6 discloses "an electric bicycle battery box", the battery box of which is curved and is set in the gap between the upper side of the rear wheel and the rear seat of the bike. The battery in this design is not easy to take out for maintenance or charge separately, and the rear of the bike appears bulky and not beautiful.

The Chinese patent CN201320193105.4 discloses "a fixing device for a built-in battery in a seat post", which has a good idea to put the battery in the seat post, but it does not explain how to make rational use of the space in the seat post.

How to create a large space to hold large capacity batteries and maintain the stability of the overall structure is a problem to be solved.

### SUMMARY

The present disclosure is to provide a built-in battery device of electric bicycle which has the advantages of reasonable space utilization, convenient assembly, small wind resistance, beautiful appearance and small vision, but can have more space to accommodate the battery.

The technical solution of the present disclosure is shown as followed: A built-in battery device of electric bicycle, comprising a seat post connected to a base, the base is connected to a saddle, and a battery pack is arranged in the seat post, wherein a cross section of the seat post is an curved surface with a narrow front end and a wide rear end; the battery pack is disposed in a stack, the number of built-in batteries arranged in a single row at the rear end is more than the number of batteries arranged in a single row at the front end on the cross section of seat post; the vertical spacing of the battery pack is provided with a connection bracket, and a head and a tail of the multi-layer batteries are fixedly connected by the connection bracket.

Single batteries of the battery pack are arranged in three rows as a front row, a middle row and a rear row on the cross section of the seat post.

The number of single batteries of the battery pack is one in the front row, two in the middle row and two in the rear row.

A boss and a through hole are arranged on the connection bracket; when the two connection brackets are in a docking position, the boss is matched with the through hole.

The connection bracket is provided with a plurality of ring holes, and an edge of each of the plurality of ring holes is provided with at least one clamping portion, and an inner diameter of the clamping portion is smaller than an inner diameter of the ring hole position.

A protective cover is fixedly arranged at a bottom of the seat post.

An elastic seal ring is arranged at edges where the protective cover and the seat post are in contact.

The seat post is inserted into a middle tube, and a cross-sectional shape of the middle tube matches with a cross-sectional shape of the seat post.

A upper end of the middle tube is provided with a vertical notch, and a retaining ring locking device is arranged at the notch.

The battery pack is connected to the controller through wires.

The cross section of the seat post in the present disclosure is a curved surface with a narrow front end and a wide rear end, which can effectively reduce wind resistance, increase riding comfort and reduce energy loss. On the cross section of seat post, the number of built-in batteries in single row at the rear end is more than that in single row at the front end, which can make full use of the space inside the seat post and arrange more single batteries. The battery pack is arranged in a stack form, and a head and a tail of the multi-layer batteries are fixedly connected by the connection bracket, such that the whole structure is very compact, reasonable and beautiful, and the arrangement is orderly. The protective cover in the bottom can be opened to take out the battery pack as a whole, which is convenient for later replacement and maintenance. In addition, the user can take out the whole seat post and the saddle directly, which is convenient for charging and meeting the anti-theft function.

### BRIEF DESCRIPTION OF THE DRAWINGS

Fig. 1 is an exploded perspective view of the built-in battery device of the electric bicycle of the present disclosure;
Fig. 2 is a cross section view of the seat post of the built-in battery device of the electric bicycle of the present disclosure;
Fig. 3 is a schematic view of the connecting bracket of the built-in battery device of the electric bicycle of the present disclosure;
Fig. 4 is an assembly view of the built-in battery device of the electric bicycle of the present disclosure;
Fig. 5 is a schematic view showing of the frame of the built-in battery device of the electric bicycle of the present disclosure.

### DETAILED DESCRIPTION OF THE EMBODIMENTS

The following is a further detailed description of the built-in battery device of the electric bicycle of the present disclosure combined with the attached drawings.

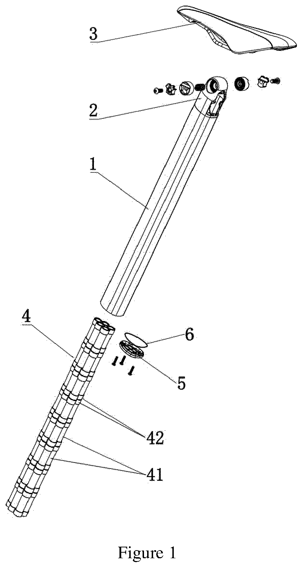

As shown in Figure 1, the built-in battery device of the electric bicycle includes a seat post 1, a base 2 and a saddle 3. The upper end of the seat post 1 is connected to the base 2, the base 2 is connected to the saddle 3, and the battery pack 4 is arranged in the seat post. The cross section of the seat post 1 is a curved surface with a narrow front end 11 and a width rear end 12. The battery pack is stacked, and the number of built-in batteries in a single row at the back end is more than that in a single row at the front end. The vertical space of the battery pack is provided with a connection bracket 42, the head and the tail of the multi-layer batteries are fixedly connected by the connection bracket. The battery pack 4 is composed of a plurality of common single batteries, and is selected according to the capacity and volume of the single battery.

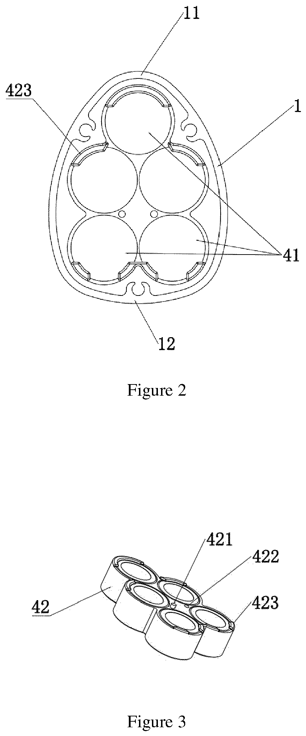

As shown in Figure 2, on the cross section of the seat post 1, the single batteries 41 of the battery pack 4 is arranged in three rows as a front row, a middle row and a rear row. According to the cross-sectional shape of the seat post 1, the space of the inner cavity of the seat post can be made best of use. Preferably, one single battery can be arranged at the place near the front end 11 of the cross section of the seat post 1, two single batteries are arranged in the middle, and two single batteries are arranged at the places near the rear end 12 of the cross section of the seat post 1, this arrangement is very compact.

As shown in Figure 3, the connection bracket 42 is provided with a boss 421 and a through hole 422. When the two connection brackets are in a docking position, the boss is matched with the through hole. In this way, the alignment between the connection brackets will be more accurate, and it can prevent loosening at the same time.

The connection bracket 42 is provided with a plurality of ring holes, and the ring hole position is configured to place the end of the single battery. An edge of each of the plurality of ring holes is provided with at least one clamping portion 423, and the inner diameter of the clamping portion is smaller than the inner diameter of the ring hole position. Especially, there will be bumps and shaking in the process of vehicle riding, the clamping portion can effectively prevent the single battery from falling out of the connection bracket.

The bottom of the seat post is fixedly provided with a protective cover 5. The protective cover 5 is fixed on the bottom of the seat post by screws and can be disassembled by means of tools. An elastic seal ring 6 is arranged at edges where the protective cover and the seat post are in contact, which plays the role of waterproof and dustproof.

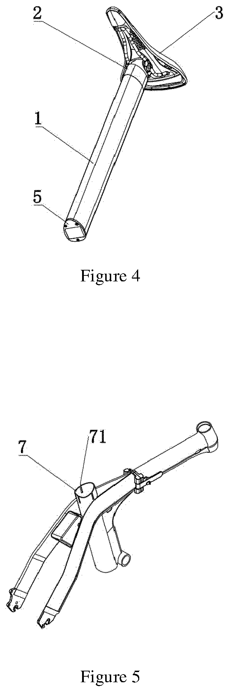

As shown in Figures 4 and 5, the seat post 1 is inserted into the middle tube 7, and the cross-sectional shape of the middle tube matches with the cross-sectional shape of the seat post, and the cross-section of the middle tube is also an curved surface with a narrow front end and a wide rear end. The outer diameter of the seat post is slightly smaller than the inner diameter of the middle tube 7.

The upper end of the middle tube is provided with a vertical notch 71, and the number of the notches is one or more. A retaining ring locking device is arranged at the notch to lock or release the seat post, so that the height of the seat post can be adjusted according to the needs of the rider. Since the retaining ring locking device belongs to the prior and conventional technology in the vehicle field, and the skilled person in the art can obtain the locking device from various channels, so it will not be described here for brevity.

The built-in battery device can be widely used in electric vehicles, electric bicycles, electric scooters and other transportation, entertainment and sports products.

The above description is only a preferred embodiment of the present disclosure which does not a limitation to restrict the present disclosure. Any modification, equivalent substitution and improvement made within the spirit and principle of the present disclosure shall be included in the scope of the present disclosure.

## Claims

1. A built-in battery device of electric bicycle, comprising a seat post (1) connected to a base (2), the base is connected to a saddle (3), and a battery pack (4) is arranged in the seat post, wherein a cross section of the seat post is an curved surface with a narrow front end (11) and a wide rear end (12); the battery pack is disposed in a stack, a number of built-in batteries arranged in a single row at the rear end is more than a number of batteries arranged in a single row at the front end on the cross section of seat post; a vertical spacing of the battery pack is provided with a connection bracket (42), and a head and a tail of multi-layer batteries are fixedly connected by the connection bracket.

2. The built-in battery device of the electric bicycle according to claim 1, wherein single batteries (41) of the battery pack are arranged in three rows as a front row, a middle row and a rear row on the cross section of the seat post.

3. The built-in battery device of the electric bicycle according to claim 2, wherein a number of single batteries of the battery pack is one in the front row, two in the middle row and two in the rear row.

4. The built-in battery device of the electric bicycle according to claim 1, wherein a boss (421) and a through hole (422) are arranged on the connection bracket; when two connection brackets are in a docking position, the boss is matched with the through hole.

5. The built-in battery device of the electric bicycle according to claim 1, wherein the connection bracket is provided with a plurality of ring holes, and an edge of each of the plurality of ring holes is provided with at least one clamping portion (423), and an inner diameter of the clamping portion is smaller than an inner diameter of the ring hole position.

6. The built-in battery device of the electric bicycle according to claim 1, wherein a protective cover (5) is fixedly arranged at a bottom of the seat post.

7. The built-in battery device of the electric bicycle according to claim 6, wherein an elastic seal ring (6) is arranged at edges where the protective cover and the seat post are in contact.

8. The built-in battery device of the electric bicycle according to claim 1, wherein the seat post is inserted into a middle tube (7), and a cross-sectional shape of the middle tube matches with a cross-sectional shape of the seat post.

9. The built-in battery device of the electric bicycle according to claim 8, wherein an upper end of the middle tube is provided with a vertical notch (71), and a retaining ring locking device is arranged at the notch.

10. The built-in battery device of the electric bicycle according to claim 1, wherein the battery pack is connected to a controller through wires.
